# FASCICULE DE BREVET EUROPEEN

(11) **EP 0 498 698 B1**
(45) Date de publication et mention de la délivrance du brevet: **18.12.1996**
(21) Numéro de dépôt: 92400235.5
(22) Date de dépôt: 29.01.1992
(51) Int. Cl.: C03C 14/00, C04B 30/02, C04B 35/80

(54) **Matériau composite céramique fibres-matrice multicouche et procédé pour son élaboration**
Keramischer, mehrschichtiger Fasermatrixverbundwerkstoff und Verfahren zu seiner Herstellung
Ceramic fibre-matrix multiplay composite and process of producing thereof

(30) Priorité: 04.02.1991 FR 9101237
(43) Date de publication de la demande: 12.08.1992
(73) Titulaire: OFFICE NATIONAL D'ETUDES ET DE RECHERCHES AEROSPATIALES, 92322 Chatillon sous Bagneux (FR)
(72) Inventeur: Colomban, Philippe, F-94260 Fresnes (FR); Menet, Martine, F-78990 Elancourt (FR); Mouchon, Emmanuelle, F-92260 Fontenay-aux-Roses (FR); Courtemanche, Gilles, F-75013 Paris (FR); Parlier, Michel, F-78960 Voisins le Bretonneux (FR)
(74) Mandataire: Plaçais, Jean-Yves

(56) Documents cités:
- EP-A- 0 130 105
- EP-A- 0 308 742
- EP-A- 0 327 783
- FR-A- 2 545 003
- GB-A- 2 190 929
- INSTITUTE OF PHYSICS. CONFERENCE SERIES. vol. 111, 1990, LONDON, GB pages 227 - 237; M. CHEN ET AL: 'The role of the interface on the densification of sol-gel processed alumina and mullite fibre composites.'
- POWDER METALLURGY INTERNATIONAL, vol. 21, no. 6, Décembre 1989, FREIBURG, DE pages 18 - 22; R. VELTRI ET. AL: 'Sol-Gel Derived Matrix Composites'
- 'Advances in Ceramics, Vol. 21: Ceramic Powder Science.' 1987 , THE AMERICAN CERAMIC SOCIETY, INC. , COLUMBUS, US
- INSTITUTE OF PHYSICS. CONFERENCE SERIES, vol. 111, 1990, LONDON, GB pages 217-226, V.GUNAY ET AL. "Continous fibre reinforced glass and glass ceramic matrix composites by sol-gel processing "

## Description

L'invention concerne les matériaux composites comprenant une matrice vitreuse et/ou céramique renforcée par des fibres longues.

EP-A-0 130 105 décrit un procédé d'élaboration d'un tel matériau composite, dans lequel on garnit les interstices d'une structure fibreuse d'un premier précurseur à l'état fluide et d'un second précurseur sous forme de particules discrètes, et on traite l'ensemble par la chaleur pour transformer le premier précurseur et le second précurseur en une matrice continue.

Dans ce procédé connu, les particules du premier précurseur sont déjà formées d'une matière céramique réfractaire, qui ne subit pas de transformations chimiques lors du traitement thermique. La liaison de ces particules entre elles et avec la matière céramique produite par le second précurseur pour former la matrice continue ne peut donc avoir lieu qu'à la température de frittage de ces particules, c'est-à-dire dans un domaine de températures très étroit et très élevé, relativement proche de la température de fusion de la matière refractaire correspondante si l'on veut obtenir une densification acceptable. Cette température élevée de traitement entraîne une forte consommation d'énergie, et surtout limite le choix des fibres de renforcement, celles-ci devant résister à la température en question. De plus, ce procédé ne permet pas d'utiliser des particules de précurseur dont la nature chimique varie dans le volume du matériau composite, avec une variation corrélative de la température de frittage, pour obtenir un matériau final dont les propriétés sont modulées.

Le but de l'invention est d'éliminer ces inconvénients et limitations.

A cet effet, dans le procédé selon l'invention, la structure fibreuse est formée par l'empilement de nappes de fibres longues tissées ou non préalablement garnies des précurseurs, et chacun de ceux-ci constitue, lors de la réalisation de l'empilement, un état intermédiaire d'un processus de préparation d'une composition verrière, vitrocéramique ou céramique par la voie sol-gel par hydrolyse et polycondensation à partir d'alcoolates ou de composés analogues, le premier précurseur ou précurseur d'interface étant à l'état de gel riche en eau, et les particules du second précurseur ou précurseur de matrice ne contenant plus que quelques pour cent d'eau en masse et pouvant se fritter à une température sensiblement plus basse que la composition finale correspondante élaborée par les méthodes céramiques ou verrières classiques. De plus, on comprime la structure fibreuse dans la direction de l'empilement, pendant le traitement thermique, pour réaliser un bon contact entre les particules du précurseur de matrice et pour permettre au gel de fluer et de remplir sensiblement la totalité des vides laissés par la structure fibreuse et par les particules du précurseur de matrice.

Les termes "précurseur de matrice" et "précurseur d'interface" sont utilisés ici uniquement à des fins distinctives, en tenant compte du fait que dans le produit final la région de la matrice au voisinage immédiat des fibres (interface dans un sens général) est issue du précurseur dit d'interface.

Dans le procédé selon l'invention, les particules de précurseur de matrice, préparées par la voie sol-gel et non entièrement transformées, sont très réactives et peuvent par conséquent se fritter entre elles et se lier à la matière céramique provenant du précurseur d'interface dans un large intervalle de températures qui s'étend par conséquent loin au-dessous de la température de fusion. Cependant, bien qu'elles ne contiennent plus que quelques pour cent d'eau, elles donnent lieu, contrairement à celles du procédé connu, à un retrait conséquent.

De préférence, on garnit les nappes de fibres du précurseur d'interface par imprégnation au moyen d'une solution de réactifs appropriés, et gélification in situ, et on les garnit du précurseur de matrice par imprégnation au moyen d'une suspension des particules de précurseur dans un véhicule liquide volatil, et séchage.

Cette double imprégnation peut être effectuée simultanément, au moyen d'une suspension des particules du précurseur de matrice dans une solution de réactifs conduisant au précurseur d'interface, ou bien successivement, les nappes de fibres préalablement garnies du précurseur d'interface étant imprégnées d'une suspension de précurseur de matrice.

Plusieurs cycles successifs imprégnation-gélification et/ou imprégnation-séchage peuvent être effectués avec des précurseurs d'interface identiques ou différents, et/ou des précurseurs de matrice identiques ou différents.

L'imprégnation simultanée par le précurseur d'interface et par le précurseur de matrice, suivie ou non d'une imprégnation séparée par un précurseur de matrice, permet un meilleur remplissage des interstices de la nappe fibreuse dans le cas où celle-ci est peu dense.

Selon une variante, on procède à un traitement thermique préalable du précurseur d'interface, après imprégnation et gélification in situ, pour obtenir un premier enrobage de la texture fibreuse constitué de particules discrètes en contact les unes avec les autres, après quoi on effectue une nouvelle imprégnation conduisant à la formation d'un précurseur d'interface identique ou non au précédent.

Toutes ces opérations d'imprégnation successives permettent d'améliorer le taux de remplissage des interstices des nappes de fibres. De plus, l'utilisation de réactifs ou de particules différant d'un cycle à l'autre permet d'associer des éléments qui ne pourraient pas, ou ne pourraient que difficilement, être introduits simultanément. Des effets particuliers peuvent également être obtenus, par exemple une augmentation de réactivité due à des gradients de concentration, lors du traitement thermique. Un précurseur d'interface peut également conduire, lors du traitement thermique de l'empilement de nappes de fibres garnies, à la formation d'une composition fondue qui réagit avec une ou des compositions solides adjacentes, de formules chimiques différentes, issues d'un autre ou d'autres précurseurs d'interface et/ou de matrice, pour former une composition solide à la même température.

Ce dernier effet est obtenu en choisissant le précurseur considéré de façon que la composition à laquelle il conduit par traitement thermique corresponde approximativement à un minimum de température de fusion du diagramme de phase correspondant. Dès que la température de fusion est obtenue, la composition devient liquide et réagit très vite avec les compositions adjacentes à l'état solide pour former une composition globale qui ne correspond plus au minimum de température de fusion et est par conséquent elle aussi à l'état solide.

L'invention prévoit également d'ajouter à une suspension de particules de précurseur de matrice des particules bien cristallisées propres à servir d'agents nucléants lors du traitement thermique, afin de conférer des propriétés physiques spécifiques telles que ténacité, transport de chaleur...

Pour améliorer la continuité entre les couches de matériau composite correspondant aux différentes nappes empilées, on peut, immédiatement avant la superposition de deux nappes garnies, étaler sur la première d'entre elles une couche supplémentaire d'une solution ou d'une suspension analogue à celles ayant servi à leur imprégnation.

Selon une caractéristique importante de l'invention, on empile des nappes dont les fibres ont une nature physique ou chimique différente d'une nappe à l'autre, et/ou qui sont garnies de précurseurs de matrice et/ou de précurseurs d'interface différents d'une nappe à l'autre. En effet, la large gamme de températures autorisées pour le traitement thermique permet de choisir une température compatible avec des compositions de matrice différentes d'une couche à l'autre. De plus, les faibles températures de traitement autorisent une large gamme de fibres de renforcement.

Les différents types de couches peuvent être associés selon tout schéma souhaité. Par exemple, une succession alternée de deux types de couches ou plus peut être utilisée pour combiner des propriétés qui ne peuvent être réunies dans une même couche. Une peau constituée par une ou plusieurs couches de natures différentes de celles formant le coeur du matériau composite peut être utilisée pour protéger celui-ci contre la chaleur ou contre les agents extérieurs tant sur le plan propriétés physiques (dureté, couleur...) que chimiques (corrosion...).

Bien entendu, les nappes de fibres des différentes couches peuvent différer non seulement par la nature chimique des fibres, mais également par leur mode d'association : feutre ou tissu, type de tissage, orientation relative des fibres tissées.

De préférence, on soumet l'empilement de nappes, dans la direction d'empilage, à une pression suffisante pour faire fluer le gel de précurseur d'interface dans les interstices entre les fibres, mais inférieure à la pression induisant la cassure des fibres, pendant une première étape du traitement thermique, et à une pression au moins égale à 70 bars environ pendant une seconde étape, la première étape se terminant et la seconde étape commençant lorsque la température franchit vers le haut un seuil compris entre 500 et 800°C, celui-ci correspondant au déclenchement des mécanismes de frittage-densification. La pression exercée pendant la première étape a également pour effet de réduire le volume apparent de l'empilement dans un rapport de l'ordre de 2 à 1. La pression plus élevée pendant la seconde étape assure un bon contact des particules de précurseur de matrice entre elles et avec celles produites par le séchage du gel précurseur d'interface. Cette pression peut avantageusement prendre des valeurs croissantes, de façon continue ou par paliers, en fonction du retrait accompagnant la transformation des précurseurs.

Dans le cas où on utilise un précurseur donnant lieu à la formation d'une phase fondue au cours du traitement thermique, il est avantageux de détecter l'apparition de traces de cette phase et d'interrompre ou de ralentir la montée en température en réponse à cette apparition, de façon à laisser à cette phase le temps de se développer de façon homogène dans le volume du matériau et d'atteindre le degré de réaction désiré.

Le procédé selon l'invention permet d'utiliser un ou des précurseurs de matrice conduisant à une composition contenant des métaux alcalins, et un ou des précurseurs d'interface conduisant à une composition ne contenant pas de métaux alcalins ou en contenant à un taux moins élevé. Les fibres sont ainsi moins exposées à l'action corrosive des ions alcalins que si une matrice ayant la même composition globale avait été obtenue à partir d'un précurseur ou de précurseurs ayant un taux de métaux alcalins uniforme.

Dans le cas où les fibres sont à base de carbure de silicium, il est avantageux d'utiliser un précurseur d'interface obtenu à partir d'une solution contenant au moins un réactif et/ou un solvant comportant une chaîne hydrocarbonée ayant au moins trois atomes de carbone. Le gel précurseur retient alors des traces de tels réactifs et/ou solvants, ces traces conduisant lors du traitement thermique à la production d'oxydes de carbone et par suite concourant à la formation d'une couche de carbone à la surface des fibres, tout en retardant la cristallisation des fibres.

L'invention vise également des types de matériaux composites que le procédé selon l'invention permet d'obtenir et qu'on ne savait pas réaliser auparavant. Il s'agit en particulier d'un matériau composite formé de fibres à base de carbures, de nitrures ou de carbonitrure, et d'une matrice du type NASICON de formule M₁₊ₓM′₂SiₓP₃₋ₓO₁₂, dans laquelle M représente un métal choisi parmi Na, Li, K et Ag, M′ représente un métal choisi parmi Zr et Ti et/ou leur association, et x est compris entre 0,2 et 3. Cette formule peut être modifiée par le remplacement partiel de Zr et Ti par Sc, Mg et/ou Ta, et par une augmentation corrélative de la quantité de M pour compenser le déficit de charge. Un tel matériau composite peut être obtenu notamment en utilisant un précurseur de matrice et un précurseur d'interface conduisant à des compositions de la formule ci-dessus dans lesquelles x est égal à 2 et voisin de 0 respectivement, le précurseur d'interface, grâce à sa faible teneur en métaux alcalins, protégeant les fibres contre l'attaque par les ions de ces métaux qui autrement les détruiraient. La juxtaposition des deux précurseurs favorise la formation de précipités.

Un autre type de matériau composite que l'invention permet d'obtenir est formé de fibres à base de carbure de silicium et d'une matrice comprenant une phase du type pseudo-brookite de formule Al₂O₃,xTiO₂, dans laquelle x est compris entre 0,5 et 4, alors qu'une telle phase ne pouvait être obtenue jusqu'ici que par frittage à des températures beaucoup plus élevées qui conduisent nécessairement à une réaction (collage entre la matrice et les fibres) empêchant l'obtention d'un bon composite.

D'autres caractéristiques et avantages de l'invention ressortiront de la description détaillée ci-après de quelques exemples de réalisation, et des dessins annexés dans lesquels :
- les figures 1 à 4 sont des diagrammes de flexion 3 points charge-flèche établis à 20°C, relatifs à différents matériaux composites selon l'invention;
- les figures 5 à 7 sont des diagrammes de flexion 3 points charge-flèche établis dans différentes conditions pour un même matériau composite où la matrice est une mullite et le précurseur d'interface du tributylborate et un alcoxyde mixte Si-O-Al hydrolysé gélifié. Sur la figure 6, la mesure est effectuée à 900°C sous air, la figure 7 correspond à un échantillon recuit à 1470°C sous air, mais cassé à 20°C ;
- la figure 8 représente l'aspect fourni par un matériau composite selon l'invention en cartographie X pour les éléments Zr, Al et Si.

Le procédé selon l'invention tel que mis en oeuvre dans les exemples ci-après peut être divisé dans les étapes suivantes :
1- Préparation des nappes de fibres.
2- Préparation de la poudre de précurseur de matrice.
3- Dépôt du précurseur d'interface.
4- Dépôt du précurseur de matrice.
5- Réalisation de l'empilement.
6- Cuisson.
7- Finition.

On donne ci-après une description générale de chacune de ces étapes.

### Etape 1 : préparation des nappes de fibres.

On découpe tout d'abord au format approprié la nappe de départ qui peut être notamment un tissu disponible dans le commerce, par exemple un tissu de type 1 direction (1D), 2 directions (2D), 3 directions (3D) ou plus, selon le nombre de directions différentes dans lesquelles s'étendent les fibres longues. Pour certains types de fibres, par exemple les fibres de carbure de silicium appelées NICALON, il peut être nécessaire d'effectuer un désensimage chimique ou thermique pour éliminer le dépôt effectué pour faciliter le tissage. On peut à cet effet immerger le tissu dans un mélange équivolumique d'acétone et d'éthanol pendant plusieurs jours. Dans d'autres cas, par exemple pour les fibres de mullite commercialisée par 3M sous la dénomination Nextel, un traitement thermique préliminaire permet de développer les propriétés mécaniques optimales.

### Étape 2 : préparation du précurseur de matrice sous forme d'une poudre très fine et très réactive.

On opère par hydrolyse-polycondensation d'un mélange de réactifs hydrolysables généralement appelés alcoolates, alcoxydes ou esters, caractérisés par la présence d'un atome de la composition finale à obtenir lié à une channe carbonée par l'intermédiaire d'un atome d'oxygène. D'autres réactifs compatibles avec les précédents peuvent le cas échéant être mélangés à ceux-ci, par exemple des silanes tels que le vinyltriméthoxysilane et le vinyltriéthoxysilane, commercialisés sous la Marque Dynasilan par la Société DYNAMIT NOBEL, des chlorosilanes, des aminosilanes, voire des siloxanes ayant au moins un branchement hydrolysable. Une étape de mélange intime entre 30°C et le point d'ébullition, généralement 110°C, favorise l'homogénéité par le développement de réactions de transestérification et de polycondensation. Une atmosphère contrôlée en traces d'eau et/ou en oxygène est généralement nécessaire à ce stade. Le mélange est ensuite hydrolysé sous forte agitation par une solution aqueuse contenant, si nécessaire, un certain nombre de sels dissous. Cette opération peut se faire à l'air. On obtient ainsi après évaporation des solvants libérés par la réaction (eau, alcools), à l'atmosphère, en étuve ou sous épiradiateurs, une poudre fine dont la formule chimique est celle d'un oxyde contenant des défauts hydroxyles et retenant de l'eau dans ses pores. Une composition typique est MO₂₋ₓ(OH)₂ₓ 3 à 6 H₂O. Cette poudre de gel amorphe a l'apparence d'une poudre sèche. Si nécessaire, les éventuels agrégats sont éliminés par désagrégation au mortier et tamisage dynamique, ou passage dans un cyclone. Cette poudre est ensuite chamottée typiquement entre 500 et 800°C pendant au moins 2 heures afin d'obtenir une poudre ayant les qualités de réactivité et de mise en oeuvre désirées. Ce traitement entraîne le départ de la plupart des molécules d'eau et groupements OH, soit une perte de masse de l'ordre de 20 à 30%. A ce stade, la poudre est en général amorphe et poreuse, et contient quelques pour cent d'eau en masse, cette eau étant, soit incorporée à la structure, soit adsorbée à la surface, y compris celle des pores. Elle conserve alors une température de frittage basse, mais pourra être mise en suspension avec une concentration suffisante. Elle présente un diamètre moyen ne dépassant pas 1 micron environ.

### Etape 3 : dépôt du précurseur d'interface.

On prépare un mélange liquide de réactifs répondant à la même définition générale que ceux utilisés pour la préparation du précurseur de matrice, auquel on ajoute le cas échéant des solvants tels qu'alcools, acétone, hexane, et quelques pour mille à quelques pour cent de polymères tels que ceux vendus sous les dénominations Arlacel et Tween, Marques déposées de la Société ICI (IMPERIAL CHEMICAL IND.). Ces additifs servent à ajuster la viscosité du mélange, les solvants pouvant également conduire à la production d'oxydes de carbone pendant le traitement thermique, comme exposé plus haut. Une préhydrolyse des réactifs peut être faite avant imprégnation pour augmenter la viscosité ou diminuer le retrait lors de la gélification. En outre, la polycondensation est favorisée par une opération de mélange-agitation entre 30 et 110°C environ, et par la transestérification résultante. Si l'hydrolyse est trop rapide, ces opérations doivent être faites en boîte à gants. Après dilution dans un solvant, les opérations peuvent généralement être faites à l'air. On immerge la nappe de fibres dans le bain obtenu ou bien on enduit la nappe au pinceau et on la met en présence de vapeur d'eau (soit à l'air ambiant, soit à l'atmosphère contrôlée d'une étuve ou d'un autoclave), à une température comprise entre 20 et 300°C. Les réactions simultanées d'hydrolyse et de polycondensation conduisent à une gélification, comme décrit dans FR-A-2 545 003. Comme indiqué plus haut, plusieurs cycles successifs d'imprégnation et de gélification peuvent être réalisés, avec des précurseurs identiques ou différents.

Comme indiqué également, on peut aussi dans certains cas effectuer un traitement thermique entre 500 et 1000°C pour densifier un premier dépôt de précurseur d'interface avant d'effectuer un second cycle d'imprégnation et d'hydrolyse.

### Étape 4 : dépôt du précurseur de matrice.

Il est possible d'utiliser pour cette étape, en tout ou en partie, une poudre du commerce présentant les caractéristiques indiquées ci-dessus à propos de l'étape 2. La poudre est mise en suspension, par exemple dans le chlorobenzène, notamment à raison de 20 à 60 g de poudre pour 100 cm3, en ajoutant environ 6% en poids de polyméthacrylate de méthyle. Des monocristaux ou des wiskers favorisant la nucléation peuvent également être ajoutés. Après agitation, on obtient une suspension homogène, dont on imprègne, au pinceau ou par trempage, la nappe de fibres préalablement garnie de précurseur d'interface à l'étape 3. Après évaporation du solvant, le dépôt durcit. Plusieurs cycles d'enduction et de séchage, à l'air ou en atmosphère ventilée, sont généralement nécessaires pour introduire la quantité de poudre voulue.

### Étape 5 : réalisation de l'empilement.

Les nappes garnies selon les étapes 3 et 4 sont découpées si nécessaire aux dimensions voulues, puis empilées selon la séquence désirée. Une couche du bain utilisé dans l'étape 3 ou de la suspension utilisée dans l'étape 4 peut être déposée sur chaque nappe avant de la recouvrir par la suivante.

### Etape 6 : traitement thermique.

L'empilement réalisé à l'étape 5 est placé dans un moule, généralement en graphite, afin d'effectuer un frittage sous charge. On applique graduellement ou par paliers une pression inférieure à 100 bars au fur et à mesure que la température s'élève, afin d'assurer un bon contact entre les particules de poudre, condition nécessaire pour qu'un frittage efficace intervienne à basse température. La présence du précurseur d'interface à l'état de gel permet, du fait de ses propriétés de fluide visqueux, de répartir de façon homogène la pression sans risquer d'abîmer les fibres. Une pression comprise entre 100 et 250 bars, selon la nature des constituants en présence, est appliquée avant le début du processus de nucléation-densification lié au départ des défauts hydroxyles, alors que la poudre est encore très réactive, c'est-à-dire à partir d'un seuil de température compris entre 500 et 800°C. La température de frittage du matériau dans le composite est supérieure d'environ 100°C à la température de fin de retrait observée sur la courbe de dilatation de la même composition massive.

Un vide dynamique, au moins jusqu'à 500°C, favorise le départ des solvants contenus dans le gel. Ensuite, le vide peut être remplacé par une atmosphère de gaz neutre (N₂,Ar), par exemple pour éviter la dégradation de fibres de carbure de silicium. La pression est généralement supprimée quelques minutes avant la fin du palier de température, afin de ne pas induire de contraintes excessives lors du refroidissement, si celui-ci est rapide.

Une phase liquide est obtenue par exemple lors du traitement thermique lorsqu'on utilise du tributylborate gélifié comme précurseur d'interface. La température d'apparition de cette phase liquide est alors comprise entre 950 et 1100°C.

### Etape 7 : finition.

Un léger usinage des faces du matériau composite peut être effectué après refroidissement et démoulage.

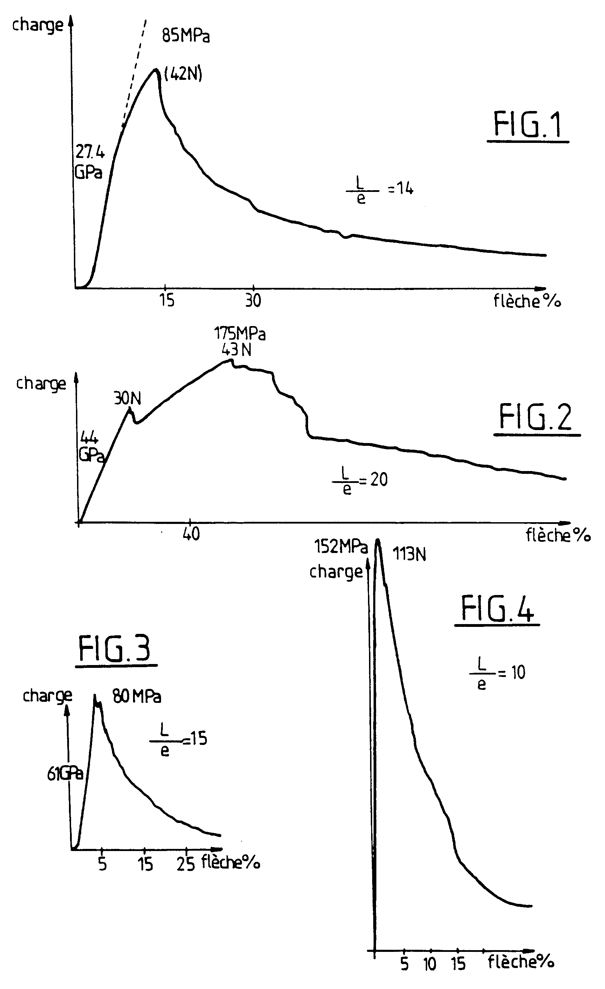

L'atmosphère réductrice d'oxydes de carbone produite par les traces de solvant protège les fibres de carbure de silicium et concourt à la formation à la surface de celles-ci d'une couche riche en carbone, qui modifie les interactions entre les fibres et la matrice. On obtient ainsi pour le matériau composite une fracture dissipative, comme le montrent les figures 1 à 4 qui sont des diagrammes charge-flèche obtenus en flexion trois points à température ambiante pour différents échantillons des matériaux composites renforcés par des tissus de carbure de silicium.

La figure 1 est relative à un matériau composite à matrice d'aluminosilicophosphate de lithium renforcé par un tissu 4D. Le précurseur d'interface est le tributylborate hydrolysé gélifié.

La figure 2 est relative à un matériau composite à matrice de Al₂TiO₅ renforcé par un satin 2D. Précurseur d'interface : butoxyde d'aluminium et butoxyde de titane hydrolysé gélifié.

La figure 3 est relative à un matériau composite formé d'une matrice de zircone contenant du calcium renforcée par un tissu 1D avec interface en verre silico-bore calcique. Le précurseur d'interface est (tributylborate + salicylate de calcium + tétraéthoxyde de silicium) + propoxyde de zirconium hydrolysé gélifié.

La figure 4 est relative à un matériau composite formé d'une matrice en NASICON x=1,9, Na_{2,9}Zr₂Si_{1,9}P_{2,1}O₁₂ renforcé par un tissu 4D, précurseur d'interface propoxyde de zirconium + tributylphosphate + tributylborate hydrolysé gélifié. Dans cette figure, la notation L/e correspond au rapport entre l'écartement entre appuis et l'épaisseur de l'échantillon (élancement). La rupture progressive des matériaux témoigne du caractère dissipatif de la rupture.

Les principales caractéristiques des différents exemples ci-après sont résumées dans le Tableau. La première colonne de ce tableau donne la composition de la solution d'imprégnation utilisée pour le précurseur d'interface. La seconde colonne indique la nature de la poudre de précurseur de matrice.

Les différents types de tissus utilisés comme nappes de fibres sont indiqués dans la troisième colonne. Les tissus SiC sont réalisés à partir de fibres Nicalon NLM 202 produites par Nippon Carbon d'un diamètre moyen de 13 microns, sous forme de torons d'environ 500 fibres. Trois types de tissus sont réalisés à partir de ces fils :
- un tissu 1D à 11 fils par cm, fabriqué par la société Brochier, tramé par un fil soluble de 100 deniers;
- un satin 2D de 8, fabriqué par Brochier sous la référence E2140; et
- un tissu 4D fabriqué par CRST (21350 Gissey le Vieil) sous la référence CYS 5086.

L'autre type de fibres est en mullite, fabriquée par 3M sous la référence NEXTEL 440, d'un diamètre moyen voisin de 10 microns et regroupées par torons de 390 unités. Ces fibres sont tissées sous forme de taffetas par Cotton Frères. La masse surfacique du tissu est de 100 g/m2.

Dans les colonnes suivantes, T et P représentent respectivement la température maximale et la pression maximale au cours du traitement thermique, V_{F} représente la fraction volumique des fibres dans le matériau composite, π₀ représente la porosité ouverte, ρ la densité, σ la résistance en flexion trois points et E le module d'Young. la flèche en % est

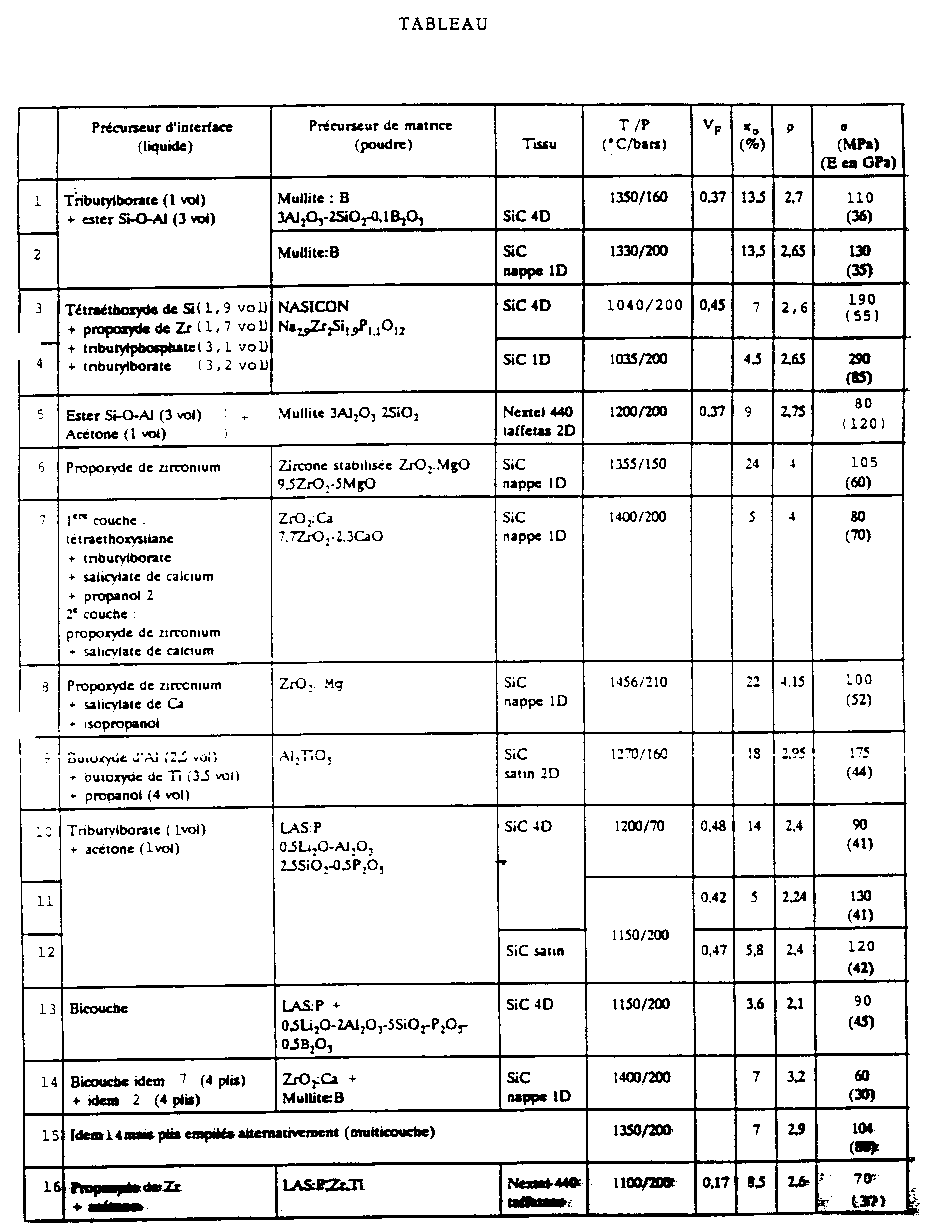

définie par rapport à l'épaisseur de l'échantillon. La charge est appliquée à une vitesse de 0,3 mm/mn.

### EXEMPLE 1

### Etape 1

Le tissu de fibres SiC NICALON, d'une masse volumique de 0,76 g/cm3, est découpé en bandes de 4 cm x 15 cm puis immergé pendant au moins trois jours dans une solution équivolumique d'acétone et d'éthanol, la solution étant renouvelée.

### Etape 2

Le précurseur de matrice de type mullite, dont la composition finale est 3Al₂O₃-2SiO₂-0,1B₂O₃, est préparé à partir d'un mélange de butylate secondaire (s-butoxyde) d'aluminium, de tétraméthoxyde de silicium et de tributylborate dissous dans l'isopropanol.

Le mélange et l'ouverture des bouteilles de réactifs doivent être faits en boîte à gants exempte d'humidité pour éviter l'hydrolyse trop rapide du réactif le plus hygroscopique, ici le butoxyde d'aluminium, source d'inhomogénéité.

Pour préparer 40 g, soit 0,1 mole, de précurseur de matrice, on utilise 152,82 cm3 de butoxyde d'aluminium, 29,64 cm3 de tétraméthoxyde de silicium, 5,39 cm3 de tributylborate et 200 cm3 de propanol.

On agite mécaniquement au moins 15 mn avant de mettre la solution à l'air libre. Il est néanmoins recommandé d'éviter les atmosphères humides.

Le mélange est ensuite transféré dans un récipient de grand volume (3 litres) où il est possible de réaliser une agitation mécanique vigoureuse avec simultanément l'introduction d'un grand excès d'eau (500 cm3, soit près de 40 fois la quantité d'eau nécessaire pour la réaction d'hydrolyse). Ceci permet d'obtenir un gel dans lequel aussi bien les teneurs en radicaux hydroxyles qu'en eau imbibant les pores sont minimales et de réduire ainsi le retrait. L'agitation est maintenue pendant au moins 30 mn. Il en résulte une première évaporation des alcools, à savoir celui utilisé comme solvant et ceux libérés par les réactions d'hydrolyse-condensation. La suspension de gel est alors versée dans deux larges cristallisoirs disposés sous des épiradiateurs infrarouges, à une distance d'environ 20 à 30 cm pour éviter l'inflammation des alcools ou la formation d'une croûte. Ce séchage s'effectue sous hotte ventilée. En une dizaine d'heures, on obtient une poudre fine, qui se désagrège au toucher (aspect neigeux). Une désagrégation au mortier d'agate peut être effectuée. La poudre, formée d'agrégats poreux d'environ 0,05 à 0,5 micron, est ensuite déposée sous forme de lits de faible épaisseur (quelques millimètres) dans des barquettes d'alumine et chamottée 20 heures entre 700 et 800°C dans un four bien ventilé. Après refroidissement, la poudre est tamisée dynamiquement à 50 microns pour éliminer les éventuels agrégats, et conservée en flacons hermétiques.

### Étape 3

Le tissu désensimé et séché est immergé dans un mélange d'alcoolates (ou alcoxydesl propre à produire le gel précurseur d'interface. Alternativement, l'imprégnation peut être réalisée au pinceau. On utilise un mélange d'un volume de tributylborate et 3 volumes d'ester Si-O-Al (C₂H₅O) Si-O-Al(OC₄H₉ sec)₂ référence Si-Al-O 84 Dynasil (Marque enregistrée) fourni par Hulls France. Ce mélange a été préalablement homogénéisé pendant au moins 15 mn, une pellicule de film plastique protégeant le liquide de l'humidité de l'air. Le tissu enduit est ensuite exposé pendant plusieurs dizaines d'heures à l'air ambiant pour développer les réactions d'hydrolyse-polycondensation qui transformeront le dépôt liquide en liquide visqueux, puis en un gel dur. Une deuxième imprégnation peut être réalisée si la quantité déposée est insuffisante. On doit atteindre pour le dépôt une masse surfacique de l'ordre de 0,07 g/cm2, mesurée après durcissement.

### Etape 4

On disperse 21 g de la poudre précurseur de matrice préparée précédemment dans 50 ml de chlorobenzène en présence de 2 g de polyméthacrylate de méthyle pendant au moins 30 mn. On imprègne la nappe, au pinceau, de cette suspension homogène. Deux couches sont déposées successivement sur chaque face de la nappe, posée à plat sur une surface propre, un séchage d'environ 1 heure étant effectué après chaque enduction. Le dépôt passe d'une couleur gris foncé au moment de l'enduction à une couleur claire après séchage, et durcit. Sa masse surfacique est de 0,15 à 0,20 g/cm2.

### Etape 5

Après séchage complet, soit une dizaine d'heures, on découpe trois morceaux de tissu enduit de 3,6 cm x 3,6 cm qu'on empile, une couche de suspension de précurseur de matrice étant déposée sur chacun des deux premiers morceaux avant la mise en place du suivant.

### Etape 6

On insère l'empilement entre deux feuilles de papier graphite Papyex (Marque enregistrée, LE CARBONE LORRAINE) de mêmes dimensions, afin d'éviter un collage avec le moule en graphite dans lequel l'ensemble est disposé. Le moule est lui-même placé dans un dispositif de chauffage/frittage propre à réaliser le programme de température et de pression voulu. On chauffe à une vitesse de 200°C par heure de 30 à 400°C puis à 500°C par heure de 400 à 1350°C. Un palier de 90 mn est alors effectué. On laisse le four refroidir librement (chute de 100°C en 5 mn, de 500°C en 1 heure, de 1000°C en 4 heures). L'échantillon est soumis à un vide primaire lors du chauffage jusqu'à 500°C, puis à une atmosphère statique de N₂. Une pression de 70 bars est appliquée à partir de 530°C, et est portée à 160 bars vers 760°C, la montée en pression se faisant de façon régulière en plusieurs minutes, et la pression est interrompue quelques instants avant la fin du palier. Le refroidissement se fait sous vide primaire à partir de 500°C.

La courbe d'analyse thermique différentielle de l'ensemble des matières déposées sur le tissu fait apparaître une phase liquide temporaire vers 1018°C qui permet de bien fritter, puis après réaction complète, permet de développer une interface dissipative supportant des traitements thermiques à haute température en atmosphère oxydante. Après l'homogénéisation par ce traitement thermique de cuisson, le point de fusion de l'ensemble reste supérieur à 1600°C. La perte de masse pendant le cycle de cuisson est voisine de 30%. Ceci correspond au départ des résidus de solvants et de traces d'eau dans le précurseur de matrice et dans le gel précurseur d'interface. Ceci conduit à une atmosphère réductrice riche en CO(CO₂) qui protège les fibres de carbure de silicium.

### Etape 7

Après refroidissement du four, le moule est sorti et l'échantillon démoulé. Les feuilles de Papyex sont enlevées par grattage ou toute autre méthode (mécanique ou par combustion à 500°C). La porosité ouverte est mesurée par absorption d'eau et poussée d'Archimède. Les microphotographies montrent que cette porosité est principalement située dans la nappe de fibres, ce qui correspond grossièrement à une porosité de 20% dans la partie poreuse.

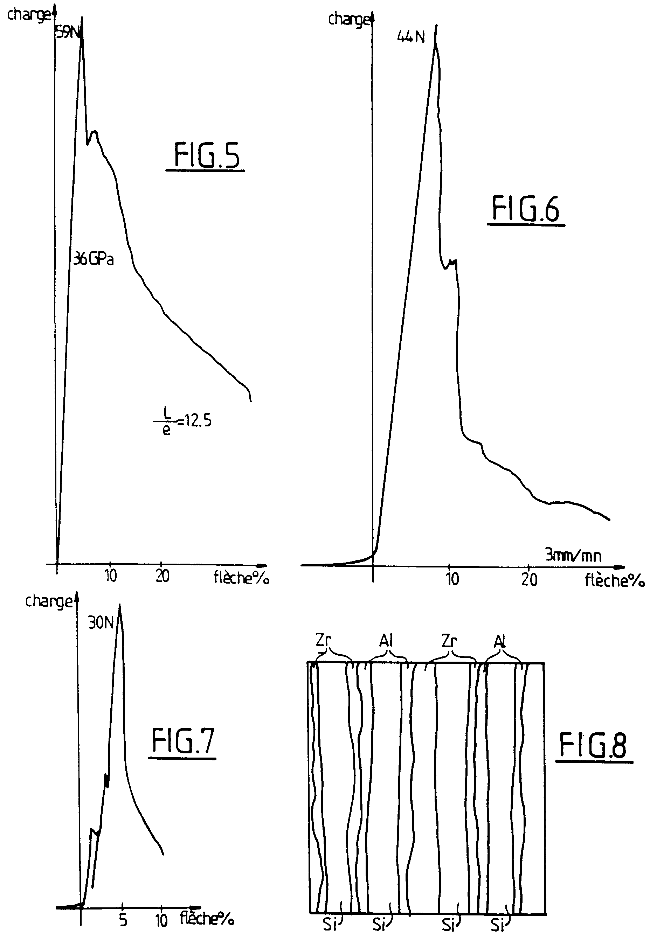

Les paramètres de l'essai de flexion trois points sont les suivants : distance entre appuis : 30 mm; vitesse d'application de la charge : 0,3 mm par mn. La courbe de flexion à 20°C révèle une rupture dissipative (figure 5). En valeur moyenne σ peut dépasser 110 MPa. Le même test effectué à 900°C à l'air conduit à une résistance de 110 MPa avec une rupture encore légèrement dissipative (figure 6). Il en est de même pour un échantillon dont la résistance est mesurée à 20°C, après avoir été porté à 1470°C pendant 3 heures à l'air (figure 7). La résistance chute alors de 50%. L'analyse par rayons X et microscopie électronique montre que la matrice est encore pour partie sous forme de mullite amorphe.

### EXEMPLE 2

Le processus est essentiellement le même que dans l'exemple 1, les différences étant indiquées ci-après et dans le tableau.

Les fibres du tissu SiC 1D sont maintenues par deux fils solubles de 100 deniers, servant de trame aux extrémités de la nappe de 10 cm x 10 cm.

A l'étape 3, deux couches de mélange liquide sont déposées à une semaine d'intervalle.

A l'étape 4, on dépose deux couches de suspension formée de 20,8 g de poudre de mullite, 50 ml de chlorobenzène et 2 g de polyméthacrylate de méthyle.

Lors de l'empilage, on veille à ce que les fibres de toutes les couches soient bien parallèles.

Lors du traitement thermique, on chauffe à une vitesse de 200°C par heure de 20 à 400°C, puis à 500°C par heure de 400°C à 1330°C où on observe un palier de 90 mn. Une pression de 100 bars est appliquée avant 450°C, de 155 bars à 540°C et de 205 bars à 650°C jusqu'à la fin du palier. L'enregistrement du déplacement du piston montre que le frittage s'effectue entre 750 et 1000°C, pratiquement comme dans l'exemple 1.

Les propriétés sont données dans le tableau.

La suppression du bore dans le précurseur de matrice conduit à une forte augmentation du module de Young, porté à 100 GPa, la résistance à la rupture étant de 160 MPa. En effet, l'addition de bore retarde la cristallisation de la matrice de mullite, ce qui conduit à abaisser le module d'Young.

### EXEMPLE 3

Dans cet exemple et dans les suivants, en l'absence d'indications contraires, l'étape 1 est identique à celle des exemples précédents utilisant le même tissu (ici 4D).

### Etape 2

On prépare une poudre de composition Na_{2,9}Zr₂Si_{1,9}P_{2,1}O₁₂ avec un excès de 2% en moles de sodium, selon la méthode 2 décrite par Ph. Colomban, Adv. Ceramics 21 (1987), 139-154. La phase organique composée de 46,79 g de propoxyde de zirconium, 20,19 g de tétraéthoxysilane (TEOS) et 100 ml de propanol-2 est mélangée sous agitation mécanique dans un bécher, recouvert d'un film plastique, pendant 15 mn. Le mélange est ensuite versé dans un large récipient (1 litre) contenant 200 ml d'eau distillée, 7,41 g de NH₄H₂PO₄ et 5,970 g de NaOH. Une agitation vigoureuse est effectuée simultanément pendant le mélange des deux liquides, puis maintenue pendant 1 heure environ. La suspension de gel est ensuite versée dans de larges cristallisoirs sous des épiradiateurs, afin d'éliminer les solvants alcooliques. En 24 heures, on obtient une poudre blanche fine. Cette poudre est disposée dans des barquettes (voir exemple 1) et traitée thermiquement à 760°C sous air pendant 27 heures. La poudre est ensuite tamisée dynamiquement puis conservée en flacons hermétiques.

### Etape 3

Le dépôt du précurseur d'interface s'effectue suivant un processus analogue à celui de l'exemple 1 : sur la bande de tissu on dépose au pinceau une couche de mélange composé de 12,07 g de tétraéthoxyde de silicium, 12,74 g de propoxyde de zirconium, 20,87 g de tributylphosphate et 19,06 g de tributylborate, représentant en équivalents oxydes les rapports 2,8/1/1,44/1,51. L'opération est renouvelée de l'autre côté du tissu après séchage du premier dépôt.

Après dépôt, le tissu enduit est exposé à l'air ambiant pendant plusieurs jours, pour obtenir une hydrolyse-polycondensation complète. On observe simultanément un durcissement du dépôt. Après 5 jours, la masse surfacique du dépôt est de 0,1 g/cm2.

### Etape 4.

On disperse dans un bécher 8,5 g de poudre de précurseur de matrice dans 48 ml de chlorobenzène en présence de 1,5 g de polyméthacrylate de méthyle. L'agitation est réalisée pendant 2 heures. Le tissu garni de précurseur d'interface est enduit avec la suspension de précurseur de matrice, à raison de deux couches par face, en attendant le blanchiment du dépôt précédent avant chaque nouveau dépôt, signe du départ de la majeure partie du solvant. La masse surfacique du dépôt est de 0,1 g/cm2. En fin de dépôt, les trous du tissu 4DIR sont comblés et la surface de la nappe est lisse.

### Etape 5.

L'empilement comporte quatre plis de 4 cm x 4 cm environ. La masse totale de l'empilement avant cuisson est de 11,22 g.

### Etape 6.

La vitesse de chauffe est de 160°C/heure jusqu'à 400°C, puis de 400°C par heure jusqu'au palier à 1040°C, qui dure 45 mn. Le refroidissement est libre (100°C en 5 mn, 500°C en 1 heure, 1000°C en 5 heures). Un vide primaire est appliqué jusqu'à la température de 720°C, puis une atmosphère de 1 bar de N₂ est appliquée. La pression est fixée à 70 bars dès 700°C, puis portée à 200 bars à 800°C jusqu'à la fin du palier. La perte de masse à la cuisson est de 23%.

L'essai de flexion est réalisé avec un rapport L/e égal à 10, et conduit à une résistance mécanique dépassant 150 MPa, avec une rupture dissipative, comme le montrent le diagramme charge/flèche (figure 4) et l'examen par microphotographie du faciès de rupture. Avec un fort grossissement on peut observer la formation d'une couche autour des fibres, ainsi que la précipitation de zircone monoclinique, phase également observable sur les diffractogrammes RX à côté des pics de la phase NASICON. Cette précipitation homogène de zircone, se produit principalement dans la zone résultant de la transformation du précurseur d'interface.

### EXEMPLE 4

### Etape 1 : le tissu est une nappe de SiC 1D, cf. ex. 2.

### Etape 2

Se reporter à l'exemple 3.

### Etape 3

Le dépôt du précurseur d'interface s'effectue en deux couches successives. Chaque opération de séchage-hydrolyse-polycondensation dure une semaine sous une humidité relative d'environ 60%.

### Etape 4

Le dépôt du précurseur de matrice s'effectue également en deux couches, la suspension contenant 10 g de poudre dans 30 ml de chlorure de méthylène avec 2,07 g de polyméthacrylate de méthyle.

### Etape 5

Huit nappes sont empilées dans les conditions décrites dans l'exemple 3.

### Etape 6

Le cycle de température de cuisson est également identique à celui de l'exemple 3. La pression est fixée à 100 bars à partir de 518°C, portée à 150 bars à partir de 637°C et à 200 bars à partir de 732°C jusqu'à 5 mn avant la fin du palier de 45 mn à 1035°C. Cette température de palier est inférieure de 250°C au point de fusion de la matrice, qui est d'environ 1285°C comme le montre la courbe d'analyse thermique différentielle.

L'essai de flexion trois points est réalisé avec un rapport L/e d'environ 21 (cf tableau).

### EXEMPLE 5

### Etape 1.

Les fibres Nextel 440 formant le tissu sont polycristallines et sont composées en poids de 70% Al₂O₃, 28% SiO₂ et 2% B₂O₃. Leur densité est de 3,1 et leur diamètre de 8 à 9 microns. Le tissu est découpé en bandes de 4 cm x 32 cm et subit un traitement thermique propre à en développer la résistance mécanique, comprenant un palier de 8 heures à l'air entre 720 et 730°C suivi d'un palier de 6 heures à l'air à 950°C. La masse surfacique est d'environ 110 g/m2.

### Etape 2.

Une poudre de mullite de formule 3Al₂O₃-2SiO₂-0,1TiO₂, le titane étant apporté à partir du butoxyde de titane, est préparée comme dans l'exemple 1.

### Etape 3-4.

Deux bandes de tissu traité thermiquement sont immergées dans un bécher contenant le mélange :
- 30 ml: d'ester Si-Al
- 10 ml: d'acétone
- 1 g: de poudre préparée à l'étape 2
préalablement soumis à une agitation magnétique.

Les bandes sont retirées et mises à sécher pendant 4 ou 5 heures. L'enduction peut se faire au pinceau en plusieurs couches, jusqu'au colmatage des trous. La masse du dépôt est d'environ 3,5 g par bande, soit environ 0,03 g/cm2.

### Étape 5.

Après séchage, 15 morceaux de 4 cm x 4 cm sont découpés et empilés, une couche de suspension étant déposée entre chaque pli.

### Étape 6.

L'empilement est placé entre deux pistons en nitrure de bore. Le moule de graphite est enduit de nitrure de bore.

Après mise en place dans le four-presse, un vide primaire est effectué. Le cycle de cuisson est le suivant :
- 0 à 400°C: 200°C par heure
- 400 à 1250°C: 500°C par heure
- palier à 1200°C: 60 mn

La pression est appliquée dès le début du chauffage (≃25 bars) puis portée graduellement à 70 bars vers 500°C, puis à 200 bars vers 750°C jusqu'à la fin du palier.

Le refroidissement est déterminé par l'inertie du four.

### Étape 7.

Après refroidissement et démoulage, la porosité ouverte est mesurée dans l'eau par la méthode d'Archimède.

La résistance mesurée en flexion trois points (3 cm entre appuis, charge de 0,3 mm/mn) est modeste (80 MPa), mais correspond à une fracture dissipative même à 900°C par extraction des fibres. Les propriétés mécaniques ne sont pas affectées de manière sensible après recuit à l'air à 1200°C.

Un dépôt préalable de propoxyde de zirconium sur le tissu, suivi d'une cuisson à 1200°C, avant l'étape 3-4, permet d'améliorer fortement les propriétés mécaniques.

### EXEMPLE 6

### Étape 1 (cf exemple 2)

### Étape 2

Le précurseur de matrice 95ZrO₂, 5MgO est préparé par hydrolyse-polycondensation d'une solution de propoxyde de zirconium et d'acétate de magnésium dans un large excès de propanol. Le mélange est fait en boîte à gants à l'abri de traces d'eau pour éviter un début d'hydrolyse de la poudre d'acétate de magnésium qui la rendrait difficilement soluble. L'ensemble est ensuite porté à ébullition pendant 15 mn pour développer l'homogénéité et obtenir une dissolution complète. La solution est alors transférée dans un réacteur de 3 litres avec une vigoureuse agitation mécanique. On ajoute environ 2 litres d'eau sous forte agitation mécanique, pendant 3 heures. La suspension de gel est ensuite versée dans deux larges cristallisoirs sous épiradiateurs infrarouges. En une dizaine d'heures sous hotte ventilée, on obtient une poudre fine. Après une passe au mortier, la poudre est déposée en un lit de faible épaisseur dans des barquettes d'alumine et chamottée 26 heures à 700°C à l'air. La poudre est ensuite conservée en flacons hermétiques. La courbe de retrait en fonction de la température montre qu'elle se fritte entre 1100 et 1200°C.

### Étape 3.

La nappe de tissu est enduite de propoxyde de zirconium sur une face au pinceau. L'hydrolyse-polycondensation s'effectue en quelques heures. Lorsque le degré de gélification est suffisant, la nappe est retournée pour l'enduction de l'autre face. L'hydrolyse-polycondensation est complète en une dizaine d'heures.

### Étape 4.

Dans un bécher, 18 g de la poudre préparée à l'étape 2 sont dispersés sous agitation mécanique dans 50 ml de trichloréthane 1-1-1 en présence de 4 g de polyméthacrylate de méthyle. L'agitation est maintenue pendant 30 mn. Les nappes de tissu enduites à l'étape 3 sont enduites au pinceau de cette suspension, en deux couches, afin d'obtenir un dépôt lisse en surface.

### Étape 5.

Après séchage, le dépôt ayant durci, les nappes enduites sont découpées au format 4 cm x 4 cm, les plis sont empilés, la suspension de l'étape 4 servant à coller les plis entre eux. Deux feuilles de Papyex sont déposées de part et d'autre de l'empilement.

### Étape 6.

La cuisson est effectuée en moule de graphite sous vide primaire. La vitesse de chauffage est de 200°C/heure jusqu'à 400°C, 500°C/heure jusqu'à 1355°C avec un palier de 90 mn. Le refroidissement est libre comme dans les autres exemples. La pression est appliquée par paliers : 100 bars à partir de 460°C, 150 bars de 650°C à la fin du palier.

### Étape 7.

Après refroidissement et démoulage, le produit est débarrassé des feuilles de Papyex. Les caractéristiques mécaniques sont portées dans le tableau. La rupture est dissipative. L'analyse par microsonde électronique et diffraction des rayons X indique que le matériau constituant la matrice résultant de la transformation des deux précurseurs est parfaitement cristallisé.

### EXEMPLE 7

### Étape 1.

Se reporter à l'exemple 6.

### Étape 2.

9,4 g de salicylate de calcium C₁₄H₁₀CaO₆2H₂O sont dissous à 50°C dans 1 litre d'isopropanol; 40 ml de propoxyde de zirconium sont ajoutés et la solution est agitée à chaud pendant 30 mn, un film plastique coiffant le bécher évitant le contact avec l'humidité de l'air. La solution est ensuite transférée dans un réacteur de 3 litres avec une vigoureuse agitation mécanique. On ajoute alors 18 ml d'eau en maintenant l'agitation pendant 3 heures. La suspension de gel est versée dans deux larges cristallisoirs sous des épiradiateurs. En une dizaine d'heures, sous hotte, on obtient une poudre fine qui est désagrégée au mortier. Cette poudre est déposée en lits dans des barquettes d'alumine et chamottée 26 heures à 700°C à l'air. On effectue alors un tamisage dynamique et la poudre est conservée en flacon hermétique. La courbe de retrait montre que cette poudre se fritte entre 1200 et 1300°C. La poudre amorphe devient cubique vers 500°C puis graduellement monoclinique et de nouveau tétragonale au-dessus de 1200°C.

### Étape 3.

Une première couche de formateur de gel correspondant à une composition finale en oxyde 3SiO₂-1B₂O₃-1CaO est préparée comme suit :

Dans un bécher on verse 40 ml de tétraéthoxysilane, 15,8 ml de tribultylborate, 20,5 g de salicylate de calcium et 15 ml de propanol-2. Le mélange est porté à ébullition pour solubiliser complètement le salicylate de calcium. On immerge la nappe dans ce mélange, puis on la suspend plusieurs heures jusqu'à durcissement complet résultant de l'hydrolyse-polycondensation. La masse surfacique du dépôt est de 0,05 g/cm2.

Après séchage, on dépose une seconde couche à base de propoxyde de zirconium et de salicylate de calcium comme décrit dans l'exemple 8 ci-après.

### Étapes 4 et 5.

Elles sont identiques à celles de l'exemple 6, l'empilement des nappes étant fait de façon à maintenir parallèles les fibres de l'ensemble des plis.

### Étape 6

Le cycle de température diffère de celui de l'exemple 6 en ce que le chauffage à 500°C/heure est poursuivi jusqu'à 1400°C, où s'effectue le palier de 90 mn. Une pression de 25 bars est appliquée dès 20°C, elle est portée à 100 bars à 460°C, ce qui déclenche une première densification, puis graduellement augmentée pour atteindre 200 bars à 660°C. Le frittage démarre vers 900°C, et est pratiquement terminé vers 1300°C.

Une microphotographie optique du matériau composite obtenu fait apparaître une bonne densification des couches de zircone.

Le diagramme charge-flèche est donné à la figure 3. On obtient une rupture bien dissipative.

### EXEMPLE 8

### Étape 2.

Le précurseur de matrice est préparé par hydrolyse-polycondensation comme dans l'exemple 6.

### Étape 3.

On prépare un mélange de 40 ml de propoxyde de zirconium, de 9,4 g de salicylate de calcium et de 12 ml d'isopropanol, à ébullition et sous agitation, qu'on dépose dans les mêmes conditions qu'à l'exemple 6. La masse surfacique du dépôt est de 0,05 g/cm2.

### Étape 4.

Dans un bécher, on disperse 18 g de la poudre de précurseur de matrice sous agitation dans 50 ml de trichloréthane 1-1-1 en présence de 4 g de polyméthacrylate de méthyle. L'agitation est maintenue pendant 30 mn. Les nappes de tissu enduites à l'étape 3 de précurseur d'interface sont enduites au pinceau de cette suspension, en deux couches, afin d'obtenir un dépôt lisse en surface, sur chaque côté. Le temps de séchage entre deux couches, sous hotte ventilée, est de 2 heures environ. La masse surfacique déposée est de 0,05 g/cm2.

### Étape 5.

Après séchage complet (une dizaine d'heures), le dépôt ayant durci, les nappes enduites sont découpées au format 4 cm x 4 cm. Huit plis sont empilés, la suspension de l'étape 2 servant à coller les plis. Deux feuilles de Papyex sont déposées de part et d'autre de l'empilement.

### Étape 6.

Le traitement thermique se fait sous vide primaire, selon le cycle suivant :

Montée à 200°C par heure jusqu'à 400°C, puis à 500°C par heure jusqu'à 1450°C, palier de 90 mn à cette dernière température. Le refroidissement est libre (100°C en 5 mn, 500°C en 1 heure, 1000°C en 5 heures). La pression est appliquée par paliers : 100 bars à 460C°, 150 bars à 595°C, puis 210 bars à partir de 660°C jusqu'à quelques instants avant la fin du palier.

La courbe charge-flèche montre une rupture bien dissipative.

### EXEMPLE 9

### Étape 1.

Le tissu, satin Brochier référence E2140, est préparé comme décrit dans l'exemple 1.

La poudre est obtenue par hydrolyse-polycondensation d'un mélange de 101,2 cm3 de s-butoxyde d'aluminium et de 68,4 cm3 de butoxyde de titane dans 68,4 cm3 d'isopropanol exempt de traces d'eau.

Le mélange est agité à 80°C pendant 1 heure à l'abri de l'humidité de l'air. Dans un large réacteur, sous forte agitation, on verse la solution alcoolique puis 360 cm3 d'eau. On maintient l'agitation pendant 1 heure. La poudre est ensuite transvasée dans de larges cristallisoirs et séchée sous épiradiateurs infrarouges, en hotte ventilée. La poudre obtenue est chamottée à 740°C pendant 28 heures, puis préparée comme indiqué dans les exemples précédents. La courbe de retrait fait apparaître une première phase de diminution de volume au-dessous de 300°C correspondant au départ des solvants (eau et alcools). Le frittage-densification s'étend de 700 à 1350°C environ, en plusieurs étapes du fait de la nucléation de différentes phases cristallines, la phase pseudo-brookite apparaissant vers 1000°C.

### Étape 3.

Dans cet exemple, le précurseur d'interface est choisi pour que, dans le matériau composite final, la composition soit la même au contact des fibres et au sein de la matrice. On prépare en boîte à gants un mélange de 12 cm3 de butoxyde d'aluminium, 17 cm3 de butoxyde de titane et 20 cm3 de propanol exempt de traces d'eau. Le mélange est agité à 60°C pendant 30 mn.

Trois couches successives de cette solution sont déposées sur le tissu, recto, puis verso et enfin recto, avec un intervalle de plusieurs heures entre chaque enduction. Le tissu enduit est exposé à l'air, l'humidité de l'air permettant les réactions d'hydrolyse-polycondensation. La masse de dépôt est de 0,616 g par gramme de tissu.

### Étape 4.

Le tissu enduit étant sec (le dépôt est dur et cassant, le poids du dépôt étant stable), on met en suspension 15 g de la poudre chamottée de l'étape 3 dans 50 g de chlorure de méthylène et 2 g de polyméthacrylate de méthyle, on agite et on dépose des couches de suspension alternativement sur les deux faces du tissu jusqu'à obtention d'un dépôt de 0,977 g de poudre par gramme de tissu, le tissu étant séché jusqu'à blanchiment et durcissement du dépôt après chaque enduction.

### Étape 5.

Après séchage complet, quatre plis de 3,6 cm x 3,6 cm sont découpés et empilés, une couche de tributylborate étant déposée au pinceau sur chacun des trois premiers plis. Des feuilles de Papyex sont déposées de part et d'autre de l'empilement.

### Étape 6.

La vitesse de chauffage est de 160°C par heure jusqu'à 400°C, puis de 400°C par heure jusqu'à 1270°C, cette température étant maintenue pendant 90 mn. Le traitement thermique est effectué sous vide primaire; le refroidissement est libre.

Une pression de 70 bars est appliquée à partir de 650°C, c'est-à-dire avant le début du processus de frittage-densification-nucléation. La pression est portée à 160 bars à 813°C et maintenue jusqu'à la fin du palier. La courbe de retrait enregistrée pendant le frittage montre que la densification s'effectue principalement entre 850 et 1050°C.

La courbe de rupture en flexion 3 points de la figure 2 montre une résistance mécanique atteignant 175 MPa avec un comportement fortement dissipatif, sans doute en relation avec la présence de la phase Al₂TiO₅, préparée par voie sol-gel et formée dès 1000°C.

Un comportement similaire est obtenu avec la composition Al₂Ti₃O₉.

### EXEMPLE 10

### Étape 1 (cf exemple 1)

### Étape 2.

Dans un boîte à gants exempte de vapeurs d'eau, on mélange dans un bécher pendant 30 mn les réactifs suivants pour obtenir 67,6 g (0,1 mole) de poudre chamottée :

101 cm3 de s-butoxyde d'aluminium, 74 cm3 de tétraméthoxyde de silicium, 54,7 cm3 de tributylphosphate et 230 cm3 de propanol. Ce mélange est fait en boîte à gants pour éviter toute hydrolyse non contrôlée du butoxyde d'aluminium. L'agitation est poursuivie à 60-80°C pendant 30 mn en dehors de la boîte à gants, le mélange étant protégé de l'atmosphère par un film plastique. Par ailleurs, une solution aqueuse de 13,8 g de nitrate de lithium est préparée dans 684 cm3 d'eau.

La solution alcoolique est alors versée dans un large réacteur (3 litres) muni d'un puissant dispositif d'agitation mécanique. Lorsque cette agitation est suffisante, on verse rapidement la solution aqueuse et on continue l'agitation pendant 1 heure. La suspension obtenue est ensuite versée en parts égales dans deux larges cristallisoirs, puis mise à évaporer sous épiradiateurs infrarouges sous hotte. Au bout d'une dizaine d'heures, on obtient une poudre fine qui est désagrégée par tamisage, puis disposée en lits de quelques millimètres d'épaisseur dans des barquettes d'alumine. Cette poudre est ensuite chamottée à 830°C sous air pendant 27 heures. On effectue ensuite un tamisage dynamique au tamis de 50 microns.

### Étape 3.

Le tissu découpé en bandes de 4 cm x 25 cm est enduit au pinceau sur les deux faces d'un mélange équivolumique de tributylborate et d'acétone préalablement homogénéisé sous agitation magnétique pendant au moins 15 mn. Le bécher contenant la solution est recouvert d'un film plastique afin d'éviter l'évaporation de l'acétone. Le rapport tributylborate/acétone influe sur la quantité de gel qui sera déposée. Le tissu enduit est ensuite hydrolysé à l'air ambiant pendant 7 jours. On obtient environ 0,02 g/cm2 de dépôt d'oxyde de bore hydraté sur le tissu.

### Étape 4.

20 g de poudre préparée à l'étape 2 sont dispersés dans 50 cm3 de monochlorobenzène avec 3 g de polyméthacrylate de méthyle sous agitation au barreau magnétique pendant 30 mn. Le dépôt de précurseur de matrice est alors effectué au pinceau sur les deux faces du tissu, en autant de couches qu'il est nécessaire pour remplir la totalité des espaces libres du squelette fibreux. Après chaque enduction, on doit attendre le séchage de la couche déposée.

Le dépôt obtenu est d'environ 0,13 g/cm2. Le dépôt de précurseur d'interface représente 15% de la masse du dépôt de précurseur de matrice, et 27% de la masse du tissu.

### Etape 5.

Après séchage complet, soit environ 1 journée, trois plis sont découpés aux dimensions du moule, soit 3,6 cm x 3,6 cm, et empilés en croisant les directions de tissage. Une légère couche de suspension de précurseur de matrice est déposée sur chacun des deux premiers plis.

### Etape 6.

Le frittage sous charge est effectué dans un moule de graphite placé entre les pistons d'un four à résistances de graphite. La vitesse de chauffe est de 160°C/heure de 20 à 500°C, de 220°C/heure de 500 à 1200°C, un palier de 90 mn étant observé à cette dernière température. Le refroidissement n'est pas contrôlé : la température tombe de 300°C en 10 mn, et de 700°C en une demi-heure.

Une pression de 70 bars est appliquée à 750°C et maintenue jusqu'à quelques instants avant la fin du palier. Un vide primaire est maintenu dans le four jusqu'à application de la pression, puis l'enceinte est remplie d'azote à 1,2 bar jusqu'au refroidissement.

La perte de masse au cours du traitement thermique est de 38%.

Une éprouvette de section 3,1 mm x 4,8 mm a donné une contrainte à la rupture en flexion trois points de 88 MPa (vitesse de traverse : 0,5 mm/mn; entraxe : 30 mm) à température ambiante. La résistance s'abaisse à 43 MPa à 900°C à l'air, le module d'Young étant de 22 GPa. La micrographie d'une tranche non polie montre une bonne densification et un bon remplissage des interstices du tissu. Le faciès de rupture montre une grande longueur d'extraction des fibres, ce qui est en accord avec la courbe charge-flèche très dissipative. L'analyse par microsonde et diffraction électronique montre que la matrice résultante est principalement amorphe avec des cristallites de 100 nm ou moins.

Après un recuit à 1000°C pendant 5 heures à l'air, la valeur moyenne de la contrainte à la rupture de deux éprouvettes semblables aux précédentes atteint 120 MPa avec une rupture dissipative.

### EXEMPLE 11

### Etapes 1 à 5.

Elles sont semblables à celles de l'exemple 10, à ceci près que la poudre est chamottée à 700°C.

### Etape 6.

La montée en température est effectuée comme dans l'exemple 3 jusqu'à la température de palier de 1150°C qui est maintenue pendant 90 mn. La vitesse de descente est de 250°C par heure jusqu'à 850°C. Le vide primaire est appliqué à l'enceinte pendant la totalité du traitement. Une pression de 25 bars est exercée sur l'échantillon dès le début du cycle; elle passe à 70 bars à 400°C, puis à 200 bars à 700°C.

L'épaisseur de l'échantillon obtenu est de 1,74 mm.

Les courbes charge-flèche sont comparables à l'exemple de la figure 1.

La charge de rupture est de 86 MPa pour un module d'Young de 27,5 GPa. La micrographie après polissage montre le bon remplissage du tissu par la matrice. La micrographie électronique en transmission fait apparaître des nanoprécipités blancs principalement de béta-spodumène et de mullite dans une matrice principalement vitreuse. La valeur moyenne de la résistance en flexion est de 130 MPa environ.

En modifiant l'étape 3 par rapport à l'exemple qui vient d'être décrit, on peut faire varier le rapport pondéral entre la quantité de précurseur d'interface et celle de précurseur de matrice. La comparaison des microstructures et des résistances mécaniques montre une grande influence de ce paramètre,les meilleures propriétés mécaniques étant obtenues pour un rapport compris entre 10 et 17%, valeurs pour lesquelles on observe un léger décollement fibres-matrice.

Ces valeurs ne sont pas dégradées par des recuits de plusieurs heures, à l'air à 1000°C.

### EXEMPLE 12

Le processus d'élaboration est analogue à celui de l'exemple 11, sauf sur les points suivants.

### Etape 1.

Le tissu de satin 8 de Brochier a une densité de 1,05 et une masse surfacique de 430 g/m2.

### Etapes 2 à 4.

Le mode opératoire est le même que pour l'exemple 5. Le dépôt d'hydrate de bore est d'environ 0,025 g/cm2. Le rapport hydrate de bore/poudre est de 32% en masse et le rapport hydrate de bore/tissu de 60% en masse.

### Etape 5.

Cinq plis sont empilés de la manière décrite dans l'exemple 3, compte tenu de la faible épaisseur du tissu.

L'échantillon terminé a une épaisseur de 1,73 mm. La résistance mécanique en flexion, qui dépasse 120 MPa à 25°C, atteint 140 MPa après recuit à l'air à 1000°C. La résistance mesurée à 900°C à l'air dépasse 87 MPa. La rupture est fortement dissipative dans tous les cas.

### EXEMPLE 13

### Etape 1 (cf exemple 1).

### Etape 2.

On prépare, d'une part une poudre de précurseur de matrice LAS:P identique à celle de l'exemple 10, d'autre part, de façon similaire, une autre poudre de composition 0,5 Li₂O-2Al₂O₃-5SiO₂-P₂O₅-0,5B₂O₃. On mélange à cet effet 96,1 cm3 de butoxyde d'aluminium, 73,7 cm3 de tétraméthoxysilane, 54,4 cm3 de tributylphosphate et 27 cm3 de tributylborate avec 251,2-cm3 de propanol, à l'agitateur magnétique pendant environ 1 heure. Cette solution est ensuite versée dans un réacteur et maintenue sous forte agitation pendant l'addition rapide de 738 cm3 d'eau contenant 6,9 g de nitrate de lithium dissous.

Après une heure d'agitation, le mélange est versé en faible épaisseur dans des cristallisoirs qui sont déposés sous des lampes infrarouges pour assurer l'évaporation de l'excédent de liquide. La poudre obtenue est ensuite tamisée à 50 microns et calcinée à 750°C pendant 27 heures. Avant utilisation, elle est de nouveau tamisée à 50 microns.

### Etape 3.

La bande de tissu est enduite d'un mélange équivolumique d'acétone et de tributylborate sur les deux faces. Elle est ensuite laissée à l'air pour l'hydrolyse.

La quantité de dépôt d'hydroxyde de bore est de 0,02 g/cm2, soit 31 g pour 100 g de tissu, mesuré après hydrolyse-gélification.

### Etape 4.

La bande de tissu est partagée en deux parties égales. Sur l'une d'elles, on applique au pinceau une suspension contenant 15 g de la première poudre préparée dans l'étape 2, 2,2 g de polyméthacrylate de méthyle et 37 cm3 de monochlorobenzène. La quantité déposée est de 0,13 g/cm2 de tissu. Sur l'autre partie, on dépose de la même façon un mélange de 12 g de la seconde poudre, 1,8 g de polyméthacrylate de méthyle et 30 cm3 de monochlorobenzène. La quantité déposée est de 0,13 g/cm2 de tissu. Le rapport pondéral précurseur d'interface/précurseur de matrice est de 18% environ.

### Etape 5.

Deux plis de tissu aux dimensions du moule sont découpés dans chacun des morceaux imprégnés. On empile d'abord les deux plis contenant la seconde poudre, puis les deux plis contenant la première poudre.

### Etape 6.

Les conditions opératoires sont les mêmes que dans l'exemple précédent.

La densité apparente du matériau composite est de 2,06, et la densité réelle de 2,40. La résistance mécanique en flexion trois points est déterminée sur des échantillons de 2 mm x - 4,5 mm x 30 mm.

Après recuit 2 heures à 700°C plus 2 heures à 1000°C à l'air, la résistance est ramenée à 77,5 MPa, et le module d'élasticité à 24,5 MPa.

### EXEMPLE 14

### Etape 1.

Les nappes de tissu 1D sont préparées comme dans les exemples 7 et 8.

### Etape 2.

Le précurseur de matrice zircone partiellement stabilisée par incorporation de calcium est préparé comme dans l'exemple 7, et le précurseur de matrice mullite : B comme dans l'exemple 2.

### Etape 3.

Une nappe est enduite comme décrit dans l'exemple 7, et une autre comme dans l'exemple 2.

### Etape 4.

La première nappe mentionnée à l'étape 3 est enduite de suspension de précurseur de matrice comme décrit dans l'exemple 7, et la seconde est enduite comme décrit dans l'exemple 2.

### Etape 5.

Les nappes sont découpées au format 3,6 cm x 3,6 cm. On empile séparément quatre plis de chacune des deux nappes, puis on superpose l'ensemble, les nappes étant collées ensemble à l'aide des suspensions de l'étape 4.

### Etape 6.

Le frittage est effectué sous vide primaire avec une vitesse de chauffage de 200°C par heure jusqu'à 400°C, puis de 500°C par heure jusqu'à 1400°C. Une pression de 25 bars est appliquée dès 25°C et est portée à 130 bars à 513°C, puis à 180 bars à 647°C, pour atteindre 200 bars à 780°C.

L'enregistrement du déplacement du piston montre que l'essentiel du frittage s'effectue entre 900 et 1020°C, avec un second retrait vers 1150°C lié à la formation d'une phase liquide temporaire avec le bore.

La densité réelle, porosité déduite, est de 3,2. On peut noter que l'addition de zircone dans une structure multicouche n'introduit pas une trop grande augmentation de la densité.

La rupture en flexion trois points est dissipative avec les deux types de matrice, les propriétés mécaniques étant plus élevées lorsque la cassure est effectuée côté mullite.

### EXEMPLE 15

Cet exemple diffère du précédent uniquement en ce que les deux types de nappes sont empilés alternativement, et en ce que la température de frittage est limitée à 1350°C maintenue pendant 30 mn.

La densité réelle est de 2,93. L'aspect fourni en cartographie X pour les éléments Si, Al et Zr est représenté à la figure 8. On observe des bandes de largeur uniforme dans lesquelles domine l'élément Si (tissu SiC enduit de précurseur d'interface transformé), encadrées alternativement par des bandes irrégulières dans lesquelles dominent Al et Zr respectivement (matrice à base de mullite et de ZrO₂, respectivement).

### EXEMPLE 16

### Etape 1.

Deux bandes de taffetas de mullite Nextel 440 de dimensions 300 mm x 40 mm sont découpées au scalpel.

### Etape 2.

Le précurseur de matrice correspond à la composition finale 0,5 Li₂O-Al₂O₃-2,5SiO₂-0,5P₂O₅-0,1ZrO₂-0,1TiO₂. Pour obtenir 0,1 mole de poudre, on mélange sous agitation magnétique pendant 1 heure 101 cm3 de tributoxyde d'aluminium, 74 cm3 de tétraméthoxysilane, 54,5 cm3 de tributylphosphate, 3,4 cm3 de butoxyde de titane, 3,2 cm3 de propoxyde de zirconium et 230 cm3 de propanol 2.

Le mélange est ensuite introduit dans un réacteur où il sera agité vigoureusement. On ajoute alors rapidement 680 cm3 d'eau contenant 13,8 g de nitrate de lithium.

Après 1 heure d'agitation, la suspension est versée dans de larges cristallisoirs placés sous épiradiateurs infrarouges pour évaporer le solvant et l'eau excédentaire. La poudre obtenue est tamisée à 50 microns afin de bien dissocier les grains, puis calcinée à 700°C pendant 27 heures à l'air, en lit de faible épaisseur dans des barquettes d'alumine. A la fin de ce traitement, elle est de nouveau tamisée à 50 microns pour détruire les agrégats éventuels.

### Etape 3.

Le tissu préalablement découpé est enduit au pinceau d'un mélange équivolumique de propoxyde de zirconium et d'acétone. Une couche est déposée sur chaque face, les bandes étant suspendues à l'air entre les deux opérations pour le séchage et l'hydrolyse. Le dépôt de gel d'oxyde de zirconium hydraté représente 32 g/m2 de tissu. Ce dépôt constituera une barrière chimique protégeant les fibres de l'attaque par la matrice.

Un traitement thermique est alors effectué dans un four électrique à l'air ambiant à 1200°C pendant 1 heure, avec une montée en température de 20°C par minute, le refroidissement étant naturel. Le dépôt d'oxyde de zirconium obtenu est de 17 g/m2 de tissu.

On effectue ensuite un nouveau dépôt de la même solution de propoxyde de zirconium, suivi d'une exposition à l'humidité pour la formation d'un gel précurseur d'interface par hydrolyse-polycondensation.

Il est possible de remplacer l'oxyde de zirconium par des oxydes de titane, de tantale, de niobium et des terres rares.

### Etape 4.

La poudre chamottée de précurseur de matrice est mise en suspension dans du monochlorobenzène à raison de 15 g pour 30 cm3 avec 3 g de polyméthacrylate de méthyle. Après agitation au barreau magnétique pendant 1 heure, ce mélange est déposé sur les bandes de tissu de manière à combler tous les interstices entre fibres. Cette opération nécessite plusieurs enductions sur chaque face, suivies par des séchages.

La quantité de poudre ainsi appliquée est de 500 g par m2 de tissu.

### Etape 5.

On découpe 15 plis de tissu enduit, qu'on empile en les collant mutuellement à l'aide d'une faible quantité de suspension de précurseur de matrice.

Le cycle de température est le suivant : montée à 160°C par heure de 20 à 500°C, puis à 220°C par heure de 500 à 1100°C, palier de 90 mn à 1100°C puis descente à 300°C par heure jusqu'à 850°C, suivie d'un refroidissement naturel.

Une pression de 25 bars est appliquée dès le début du cycle pour assurer un bon contact entre les grains. A 360°C, la pression est portée à 70 bars, puis à 200 bars à 665°C. Cette pression est relâchée 5 mn avant la fin du palier de frittage.

L'enceinte du four est mise sous vide dynamique pendant toute la totalité du cycle, jusqu'au refroidissement complet.

L'épaisseur finale est de 3,25 mm au lieu de 8,25 mm avant frittage. Une mesure par balance hydrostatique donne une porosité de 8,5% pour une densité réelle de 2,57.

La résistance à la flexion de 70 MPa à 25°C est pratiquement conservée à 900°C à l'air. On note que l'extension des fibres conduit à une fracture dissipative tant à froid qu'à chaud.

Les paramètres opératoires utilisés dans les différents exemples n'étant pas optimisés, on peut s'attendre à une amélioration des propriétés des matériaux composites par une telle optimisation.

## Revendications

1. Procédé d'élaboration d'un matériau composite comprenant une matrice vitreuse et/ou céramique renforcée par des fibres longues, procédé dans lequel on garnit les interstices d'une structure fibreuse d'au moins un premier précurseur à l'état fluide, et d'au moins un second précurseur sous forme de particules discrètes, et on traite l'ensemble par la chaleur pour transformer le premier précurseur et le second précurseur en une matrice continue, caractérisé en ce que la structure fibreuse est formée par l'empilement de nappes de fibres longues tissées ou non préalablement garnies desdits précurseurs, que chacun de ceux-ci constitue lors de l'empilement un état intermédiaire d'un processus de préparation d'une composition verrière, vitrocéramique ou céramique par la voie sol-gel par hydrolyse et polycondensation à partir d'alcoolates ou de composés analogues, le premier précurseur ou précurseur d'interface étant à l'état de gel riche en eau, et les particules du second précurseur ou précurseur de matrice ne contenant plus que quelques pour cent d'eau en masse et pouvant se fritter à une température sensiblement plus basse que la composition finale correspondante, et en ce qu'on comprime la structure fibreuse dans la direction de l'empilement, pendant le traitement thermique, pour réaliser un bon contact entre les particules du précurseur de matrice et pour permettre au gel de fluer et de remplir sensiblement la totalité des vides laissés par la structure fibreuse et par lesdites particules.

2. Procédé selon la revendication 1, caractérisé en ce qu'on garnit les nappes de fibres du précurseur d'interface par imprégnation au moyen d'une solution de réactifs appropriés, et gélification in situ.

3. Procédé selon l'une des revendications 1 et 2, caractérisé en ce qu'on garnit les nappes de fibres du précurseur de matrice par imprégnation au moyen d'une suspension des particules de précurseur dans un véhicule liquide, et séchage.

4. Procédé selon la revendication 2 et la revendication 3, caractérisé en ce qu'on garnit les nappes de fibres simultanément d'au moins un précurseur d'interface et d'au moins un précurseur de matrice, l'imprégnation étant réalisée au moyen d'une suspension des particules du précurseur de matrice dans une solution des réactifs conduisant au précurseur d'interface.

5. Procédé selon la revendication 2 et la revendication 3, caractérisé en ce qu'on garnit d'au moins un précurseur de matrice, par imprégnation, les nappes de fibres préalablement garnies du précurseur d'interface.

6. Procédé selon l'une des revendications 2 à 5, caractérisé en ce qu'on réalise au moins deux cycles successifs d'imprégnation et de séchage et/ou gélification.

7. Procédé selon la revendication 6, caractérisé en ce que les cycles successifs utilisent des suspensions de particules de compositions chimiques différentes et/ou des solutions de réactifs de formules chimiques différentes.

8. Procédé selon l'une des revendications 6 et 7, caractérisé en ce qu'on procède à un traitement thermique du précurseur d'interface garnissant les nappes de fibres pour obtenir des particules discrètes enrobant les fibres, suivi d'une nouvelle imprégnation conduisant à la formation d'un précurseur d'interface identique ou non au précédent.

9. Procédé selon l'une des revendications 6 à 8, caractérisé en ce qu'au moins un précurseur d'interface conduit lors du traitement thermique de l'empilement de nappes de fibres garnies à la formation d'une composition fondue qui réagit avec une ou des compositions solides adjacentes, de formules chimiques différentes, issues d'un autre ou d'autres précurseurs d'interface et/ou de matrice, pour former une composition solide à la même température.

10. Procédé selon l'une des revendications 2 à 9, caractérisé en ce qu'une suspension de particules de précurseur de matrice contient également des particules bien cristallisées propres à servir d'agent nucléant lors du traitement thermique.

11. Procédé selon l'une des revendications précédentes, caractérisé en ce qu'immédiatement avant la superposition de deux nappes garnies, on étale sur la première d'entre elles une couche supplémentaire d'une solution ou d'une suspension analogue à celles ayant servi à leur imprégnation.

12. Procédé selon l'une des revendications précédentes, caractérisé en ce qu'on empile des nappes de fibres de différents types et/ou qui sont garnies de précurseurs de matrice et/ou de précurseurs d'interface différents d'une nappe à l'autre.

13. Procédé selon l'une des revendications précédentes, caractérisé en ce qu'on soumet l'empilement de nappes, dans la direction d'empilage, à une pression suffisante pour faire fluer le gel de précurseur d'interface dans les interstices entre les fibres, mais inférieure à la pression induisant la cassure des fibres, pendant une première étape du traitement thermique, et à une pression au moins égale à 70 bars environ pendant une seconde étape, la première étape se terminant et la seconde étape commençant lorsque la température franchit vers le haut un seuil compris entre 500 et 800°C, correspondant au commencement du frittage du précurseur de matrice.

14. Procédé selon la revendication 13, caractérisé en ce que la pression prend des valeurs croissantes au cours de la seconde étape.

15. Procédé selon l'une des revendications précédentes, caractérisé en ce qu'on détecte, au cours du traitement thermique, l'apparition de traces de phase fondue résultant de la transformation d'un précurseur d'interface, et qu'on interrompt ou ralentit la montée en température en réponse à cette apparition.

16. Procédé selon l'une des revendications précédentes, caractérisé en ce que le ou les précurseurs de matrice conduisent à une composition contenant des métaux alcalins et que le ou les précurseurs d'interface conduisent à une composition ne contenant pas de métaux alcalins ou en contenant à un taux moins élevé.

17. Procédé selon l'une des revendications précédentes, caractérisé en ce que les fibres sont à base de carbure de silicium et en ce qu'un précurseur d'interface est obtenu à partir d'une solution contenant au moins un réactif et/ou un solvant comportant une chaîne hydrocarbonée ayant au moins trois atomes de carbone, et contient des traces de tels réactifs et/ou solvants, ces traces conduisent lors du traitement thermique à la production d'oxydes de carbone et par suite à la formation d'une couche de carbone à la surface des fibres.

18. Matériau composite tel qu'il peut être obtenu par le procédé selon l'une des revendications précédentes, formé de fibres à base de carbure, de nitrure ou de carbonitrure, et d'une matrice du type NASICON de formule M₁₊ₓM′₂SiₓP₃₋ₓO₁₂, dans laquelle M représente un métal choisi parmi Na, Li, K et Ag, M′ représente un métal choisi parmi Zr, Ti et/ou leur association, et x est compris entre 0,2 et 3, Sc, Ta et Mg pouvant substituer partiellement Zr et Ti, le déficit en charge étant alors compensé par un excès de M.

19. Matériau composite tel qu'il peut être obtenu par le procédé selon l'une des revendications 1 à 17, formé de fibres à base de carbure de silicium et d'une matrice comprenant une phase du type pseudo-brookite de formule Al₂O₃,xTiO₂, dans laquelle x est compris entre 0,5 et 4.

## Claims

1. Process for preparing a composite material comprising a vitreous and/or ceramic matrix reinforced by long fibres, a process in which the interstices of a fibrous structure are filled with at least one first precursor in the fluid state and at least one second precursor in the form of discrete particles, and the assembly is treated by heat to convert the first precursor and the second precursor into a continuous matrix, characterized in that the fibrous structure is formed by stacking sheets of long fibres, woven or not, previously filled with the said precursors, in that each of these constitutes when stacked an intermediate state of a process for the preparation of a glass, vitro-ceramic or ceramic composition by the sol-gel process by hydrolysis and polycondensation starting with alcoholates or similar compounds, the first precursor or interface precursor being in the state of a gel rich in water, and the particles of the second precursor or matrix precursor containing no more than a few per cent of water by mass and being able to sinter at a temperature which is substantially lower than for the corresponding final composition, and in that the fibrous structure is compressed in the direction of the stack, during heat treatment, to produce good contact between the particles of the matrix precursor and to enable the gel to flow and substantially fill all the voids left by the fibrous structure and by the said particles.

2. Process according to claim 1, characterized in that the fibre sheets are filled with the interface precursor by impregnation using a solution of suitable reagents, and gelling these in situ.

3. Process according to one of claims 1 and 2, characterized in that the fibre sheets are filled with the matrix precursor by impregnation using a suspension of the precursor particles in a liquid vehicle, and drying.

4. Process according to claim 2 and claim 3, characterized in that the fibre sheets are filled simultaneously with at least one interface precursor and at least one matrix precursor, impregnation being carried out by means of a suspension of particles of the matrix precursor in a solution of reagents resulting in the interface precursor.

5. Process according to claim 2 and claim 3, characterized in that the fibre sheets previously filled with the interface precursor are filled with at least one matrix precursor, by impregnation.

6. Process according to one of claims 2 to 5, characterized in that at least two successive impregnation and drying and/or gelling cycles are carried out.

7. Process according to claim 6, characterized in that the successive cycles use suspensions of particles having different chemical compositions and/or solutions of reagents with different chemical formulae.

8. Process according to one of claims 6 and 7 characterized in that the interface precursor filling the fibre sheets is heat treated to obtain discrete particles covering the fibres, followed by a new impregnation leading to the formation of an interface precursor which is identical or not to the preceding one.

9. Process according to one of claims 6 to 8, characterized in that at least one interface precursor leads, during the heat treatment of the stack of sheets of coated fibres, to the formation of a molten composition which reacts with one of the adjacent solid compositions, having different chemical formulae, resulting from one or other interface precursors and/or matrix precursors, to form a solid composition at the same temperature.

10. Process according to one of claims 2 to 9, characterized in that a suspension of matrix precursor particles also contains highly crystallized particles which are able to serve as a nucleating agent during heat treatment.

11. Process according to one of the preceding claims, characterized in that immediately before two coated sheets are placed one on the other, a supplementary layer of a solution or a suspension similar to those used for their impregnation is spread on the first of these sheets.

12. Process according to one of the preceding claims, characterized in that a stack is formed of sheets of fibres which are of different types and/or which are coated with matrix precursors and/or interfaced precursors which are different from one sheet to another.

13. Process according to one of the preceding claims, characterized in that the stack of sheets is subjected, in the direction of stacking, to sufficient pressure to cause the gel of the interface precursor to flow into the interstices between the fibres but which is less than the pressure causing the fibres to break, during a first heat treatment stage, and at a pressure at least equal to about 70 bars during the second stage, the first stage ending and the second stage commencing when the temperature crosses an upper limit between 500 and 800°C, corresponding to the start of sintering of the matrix precursor.

14. Process according to claim 13, characterized in that the pressure has increasing values during the second stage.

15. Process according to one of the preceding claims, characterized in that during heat treatment, the appearance is detected of traces of a molten phase resulting from the conversion of an interface precursor, and in that the increase in temperature is interrupted or slowed down in response to this appearance.

16. Process according to one of the preceding claims, characterized in that the matrix precursor or precursors lead to a composition containing alkali metals and that the interface precursor or precursors lead to a composition which do not contain alkali metals or contains a lower level of these.

17. Process according to one of the preceding claims, characterized in that the fibres are based on silicon carbide and in that an interface precursor is obtained from a solution containing at least one reagent and/or one solvent comprising a hydrocarbon chain having at least three carbon atoms, and containing traces of such reagents and/or solvents, these traces leading during heat treatment to the production of oxides of carbon and consequently to the formation of a layer of carbon on the surface of the fibres.

18. Composite materials such as may be obtained by the process according to one of the preceding claims, formed from fibres based on carbide, nitride or carbo-nitride, and from a matrix of the NASICON type with the formula M₁₊ₓM'₂SiₓP₃₋ₓO₁₂, in which M represents a metal selected from Na, Li, K and Ag, M' represents a metal selected from Zr, Ti and/or an association between them, and x is between 0.2 and 3, Sc, Ta and Mg being able partially to substitute for Zr and Ti, the deficit in the loading being then compensated for by an excess of M.

19. Composite material such as may be obtained by the process according to one of claims 1 to 17, formed of fibres based on silicon carbide and a matrix comprising a phase of the pseudo-brookite type of the formula Al₂O₃,xTiO₂, in which x lies between 0.5 and 4.

## Patentansprüche

1. Herstellungsverfahren für ein Verbundmaterial, das eine glasartige und/oder keramische, durch lange Fasern verstärkte Matrix umfaßt, Verfahren bei dem man die Zwischenräume einer fasrigen Struktur mit mindestens einem ersten Zwischenstoff im flüssigen Zustand und mindestens einem zweiten Zwischenstoff in der Form von einzelnen Teilchen versieht, und man die Gesamtheit mit Wärme behandelt, um den ersten Zwischenstoff und den zweiten Zwischenstoff in eine durchgehende Matrix umzuwandeln, **dadurch gekennzeichnet**, daß die faserige Struktur durch die Aufschichtung von Lagen aus langen, gewobenen oder nicht im voraus mit den genannten Zwischenstoffen versehenen Fasern gebildet wird, daß jeder von ihnen bei der Aufschichtung einen Zwischenzustand eines Herstellungsgangs einer Glas-, glaskeramischen oder keramischen Zusammensetzung mittels Sol-Gel durch Hydrolyse und Polykondensation ausgehend von Alkoholaten oder analogen Zusammensetzungen bildet, der erste Zwischenstoff oder Grenzschichtzwischenstoff im Zustand eines an Wasser reichen Gels ist, und die Teilchen des zweiten Zwischenstoffes oder des Matrixzwischenstoffes nur einige Prozent Wasser in der Masse enthalten und bei einer im wesentlichen niedrigeren Temperatur als die entsprechende Endverbindung sintern können, und daß man die faserige Struktur in Richtung der Aufschichtung während der Wärmebehandlung zusammendrückt, um eine gute Berührung zwischen den Teilchen des Matrixzwischenstoffes herzustellen und um dem Gel zu erlauben, zu fließen und um im wesentlichen die Gesamtheit der durch die faserige Struktur und durch die genannten Teilchen gelassenen Hohlräume zu füllen.

2. Verfahren gemäß Anspruch 1, **dadurch gekennzeichnet**, daß man die Faserlagen mit dem Grenzschichtzwischenstoff durch Imprägnierung mittels einer Lösung aus geeigneten Reagenzien und durch Gelierung vor Ort ausstattet.

3. Verfahren gemäß einem der Ansprüche 1 und 2, **dadurch gekennzeichnet**, daß man die Faserlagen mit dem Matrixzwischenstoff durch Imprägnierung mittels einer Suspension von Zwischenstoffteilchen in einem flüssigen Träger und Trocknung ausstattet.

4. Verfahren gemäß Anspruch 2 und Anspruch 3, **dadurch gekennzeichnet**, daß man die Faserlagen gleichzeitig mit mindestens einem Grenzschichtzwischenstoff und mindestens einem Matrixzwischenstoff versieht, wobei die Imprägnierung mittels einer Suspension von Teilchen des Matrixzwischenstoffes in einer Lösung von Reagenzien hergestellt wird, die zu dem Grenzschichtzwischenstoff führen.

5. Verfahren gemäß Anspruch 2 und Anspruch 3, **dadurch gekennzeichnet**, daß man die Faserlagen, die im voraus mit Grenzschichtzwischenstoffen ausgestattet sind, mit mindestens einem Matrixzwischenstoff durch Imprägnierung versieht.

6. Verfahren gemäß einem der Ansprüche 2 bis 5, **dadurch gekennzeichnet**, daß man mindestens zwei aufeinanderfolgende Imprägnierungs- und Trocknungs- und/oder Gelierungszyklen herstellt.

7. Verfahren gemäß Anspruch 6, **dadurch gekennzeichnet**, daß die aufeinanderfolgenden Zyklen Suspensionen von Teilchen chemisch unterschiedlicher Zusammensetzungen und/oder Lösungen von Reagenzien unterschiedlicher chemischer Formeln verwenden.

8. Verfahren gemäß einem der Ansprüche 6 und 7, **dadurch gekennzeichnet**, daß man eine Wärmebehandlung des Grenzschichtzwischenstoffes durchführt, wobei die Faserlagen ausgestattet werden, um einzelne Teilchen zu erhalten, die die Fasern umgeben, gefolgt von einer neuen Imprägnierung, die zu der Bildung eines mit dem vorhergehenden identischen oder nichtidentischen Grenzschichtzwischenstoffes führt.

9. Verfahren gemäß einem der Ansprüche 6 bis 8, **dadurch gekennzeichnet**, daß mindestens ein Grenzschichtzwischenstoff bei der Wärmebehandlung der Aufschichtung der ausgestatteten Faserlagen zur Bildung einer geschmolzenen Zusammensetzung führt, die mit einer oder benachbarten, festen Zusammensetzungen unterschiedlicher, chemischer Formeln reagiert, die von einem anderen oder anderen Zwischenstoffen der Grenzschicht und/oder der Matrix abgeleitet werden, um eine feste Zusammensetzung bei derselben Temperatur zu bilden.

10. Verfahren gemäß einem der Ansprüche 2 bis 9, **dadurch gekennzeichnet**, daß eine Suspension von Teilchen des Matrixzwischenstoffes ebenfalls gut kristallisierte Teilchen enthält, die geeignet sind, als Nukleationsagenz bei der Wärmebehandlung zu dienen.

11. Verfahren gemäß einem der vorhergehenden Ansprüche, **dadurch gekennzeichnet**, daß man unmittelbar vor der Überlagerung zweier ausgestatteter Lagen auf der ersten von ihnen eine zusätzliche Schicht einer Lösung oder einer Suspension ausbreitet, die denjenigen analog ist, die zu ihrer Imprägnierung gedient haben.

12. Verfahren gemäß einem der vorhergehenden Ansprüche, **dadurch gekennzeichnet**, daß man Lagen von Fasern unterschiedlicher Arten und/oder die mit unterschiedlichen Matrixzwischenstoffen und/oder Grenzschichtzwischenstoffen von einer Lage zur nächsten ausstattet sind, aufschichtet.

13. Verfahren gemäß einem der vorhergehenden Ansprüche, **dadurch gekennzeichnet**, daß man während einer ersten Stufe der Wärmebehandlung die Aufschichtung von Lagen in der Aufschichtungsrichtung einem ausreichenden Druck aussetzt, damit das Gel des Grenzschichtzwischenstoffes in die Zwischenräume zwischen den Fasern fließen kann, aber niedriger als der Druck, der den Bruch der Fasern herbeiführt, und einem Druck von mindestens ungefähr 70 Bar während einer zweiten Stufe, wobei die erste Stufe endet und die zweite Stufe beginnt, wenn die Temperatur nach oben eine Schwelle überschreitet, die zwischen 500 und 800°C liegt und dem Sinterungsbeginn des Matrixzwischenstoffes entspricht.

14. Verfahren gemäß Anspruch 13, **dadurch gekennzeichnet**, daß der Druck zunehmende Werte im Laufe der zweiten Stufe annimmt.

15. Verfahren gemäß einem der vorhergehenden Ansprüche, **dadurch gekennzeichnet**, daß man während der Wärmebehandlung das Auftreten von Spuren geschmolzener Phasen erfaßt, die sich aus der Umwandlung eines Grenzschichtzwischenstoffes ergeben, und daß man den Temperaturanstieg in Reaktion auf diese Erscheinung unterbricht oder verlangsamt.

16. Verfahren gemäß einem der vorhergehenden Ansprüche, **dadurch gekennzeichnet**, daß der oder die Matrixzwischenstoffe zu einer Zusammensetzung führen, die Alkalimetalle enthalten, und daß der oder die Grenzschichtzwischenstoffe zu einer Zusammensetzung führen, die Alkalimetalle nicht enthalten oder davon in geringer Menge enthalten.

17. Verfahren gemäß einem der vorhergehenden Ansprüche, **dadurch gekennzeichnet**, daß die Fasern auf der Grundlage von Siliciumcarbid sind und daß ein Grenzschichtzwischenstoff ausgehend von einer Lösung erhalten wird, die mindestens ein Reagenz und/oder ein Lösungsmittel enthält, das eine Kohlenwasserstoffkette aufweist, die mindestens drei Kohlenstoffatome aufweist, und Spuren solcher Reagenzien und/oder Lösungsmittel enthält, wobei diese Spuren bei der Wärmebehandlung zu der Erzeugung von Kohlenstoffoxiden und danach zu der Bildung einer Kohlenstoffschicht auf der Oberfläche der Fasern führen.

18. Verbundmaterial, wie es durch das Verfahren gemäß einem der vorhergehenden Ansprüche erhalten werden kann, gebildet aus Fasern auf der Grundlage von Carbid, von Nitrid oder von Kohlenstoffnitrid und einer Matrix von der Art NASICON der Formel M₁₊ₓM'₂SiₓP₃₋ₓO₁₂, in der M ein Metall darstellt, das gewählt ist aus Na, Li, K und Ag, M' ein Metall darstellt, das ausgewählt ist aus Zr, Ti und/oder ihrer Verbindung, und x zwischen 0,2 und 3 liegt, Sc, Ta und Mg teilweise Zr und Ti ersetzen können, wobei der Ladungsmangel dann durch einen Überschuß an M ausgeglichen wird.

19. Verbundmaterial, wie es durch das Verfahren gemäß einem der Ansprüche 1 bis 17 erhalten werden kann, gebildet von Fasern auf der Grundlage von Siliciumcarbid und einer Matrix, die eine Phase vom Typ Pseudo-Brookite der Formel Al₂O₃,xTiO₂ umfaßt und in der x zwischen 0,5 und 4 liegt.
